# FASCICULE DE BREVET EUROPEEN

(11) **EP 1 354 507 B1**
(45) Date de publication et mention de la délivrance du brevet: **30.07.2008**
(21) Numéro de dépôt: 03290974.9
(22) Date de dépôt: 18.04.2003
(51) Int. Cl.: A01B 3/44

(54) **Appareil aratoire**
Kultivationsgerät
Cultivating apparatus

(30) Priorité: 19.04.2002 FR 0204945
(43) Date de publication de la demande: 22.10.2003
(73) Titulaire: ETABLISSEMENTS BUGNOT, 52270 Bettaincourt Sur Rognon (FR)
(72) Inventeur: Bugnot, Michel, 52270 Bettaincourt Sur Rognon (FR)
(74) Mandataire: Robert, Jean-Pierre

(56) Documents cités:
- EP-A- 1 068 782
- FR-E- 26 214
- US-A- 1 603 993
- US-A- 2 974 738
- US-A- 4 441 562

## Description

La présente invention concerne un appareil aratoire du type charrue.

### ARRIERE PLAN DE L'INVENTION

Il existe de nombreux types de charrues comportant un châssis équipé de moyens pour son attelage à l'arrière d'un véhicule tracteur et auquel sont fixées une ou plusieurs structures portant les outils de travail du sol (voir p. ex. EP 1 068 782 A1). Ces structures comprennent généralement des poutres (ages) qui, en position de travail, s'étendent parallèlement au sol et en biais par rapport à l'axe d'avancement du véhicule tracteur et sous lesquelles sont disposées les pièces travaillantes. Les charrues fixes avec une seule rangée de corps, ne permettent pas de revenir sur le sillon déjà réalisé et labourent à la planche. Le labour à plat, le plus courant, demande de mettre en jeu des charrues réversibles avec deux rangées de corps de labour, les uns versant à droite, et les autres versant à gauche. Pour passer d'une rangée de corps à l'autre, on fait tourner l'ensemble autour de l'age de la charrue d'un quart ou d'un demi tour tout en changeant de côté le déport en biais de cet age par rapport à l'axe d'avancement des tracteurs.

On connaît de nombreux types de charrues réversibles, et certaines d'entre elles, semi-portées, ayant de nombreux corps pour une grande largeur de travail, possèdent à partir d'un châssis central généralement supporté par des roues, un avant-train d'outil et un arrière-train d'outils qui, lors de leur inversion, décrivent un demi-cône ouvert vers l'avant pour l'avant-train et ouvert vers l'arrière pour l'arrière-train, leur pointe étant au niveau du châssis central.

La réversibilité exige de disposer d'un espace libre important pour ne pas entraver le mouvement des structures porte-corps. Ceci conduit à éloigner de manière importante également la charrue ou son avant-train d'outils du tracteur. Il résulte de cela un ensemble ayant un encombrement longitudinal important et dont le point d'application des forces résistantes sur les outils est fortement éloigné de l'attelage de la charrue au tracteur. Ces géométries engendrent des inconvénients non seulement au niveau du transport de la charrue pour atteindre ou quitter les lieux des labours, mais également en ce qui concerne la manoeuvrabilité de l'attelage soit en bout de champ pour procéder au retournement de la charrue, soit pendant le travail qui est plus complexe à conduire. C'est pourquoi il est préféré, avec ce type d'engin, de travailler dans la raie malgré le déséquilibre latéral qui résulte du déport de la bande travaillée par rapport à l'axe d'avancement du tracteur.

Certains travaux, notamment les labours peu profonds, s'accommodent mal des inconvénients de ces appareils connus.

### OBJET DE L'INVENTION

Par une nouvelle structure de charrue, la présente invention entend répondre à un besoin de travail du sol notamment hors raie, sur une largeur importante avec un matériel compact et relativement léger par rapport aux dispositifs connus.

### BREVE DESCRIPTION DE L'INVENTION

A cet effet, l'invention a donc pour objet un appareil aratoire formé d'un châssis avec un axe de symétrie longitudinal et avec des moyens pour son attelage à l'arrière d'un tracteur agricole et d'une structure porteuse à laquelle sont liés les corps de labour, structure reliée au châssis par des moyens autorisant une mobilité relative entre elle et le châssis. Plus précisément, selon l'invention, telle qu'elle est caractérisée dans les revendications, la structure porteuse comporte au moins deux poutres, chacune articulée au châssis autour d'un pivot de ce dernier par son extrémité arrière entre une position de travail sensiblement horizontale en avant du pivot et dans laquelle la poutre forme avec l'axe de symétrie du châssis un angle déterminé ouvert vers l'avant et une position relevée dans laquelle des corps de labour sont éloignés du sol.

Par cette disposition, l'appareil selon l'invention présente les mêmes avantages qu'une charrue réversible, c'est-à-dire permet de labourer à plat avec en outre une chaîne de transmission des efforts de traction très courte et très près de tracteur. En effet, chaque poutre est articulée par son extrémité arrière au châssis et est manoeuvrée par un simple vérin autour de son articulation entre une position horizontale dans laquelle elle s'étend vers l'avant jusqu'au niveau des roues arrières du tracteur et qui constitue la position de travail de la charrue et une position relevée, par exemple verticale, qui constitue la position hors service de la charrue de transport à encombrement très réduit.

Dans un mode complet de réalisation de l'appareil selon l'invention, la structure porteuse comporte deux poutres supplémentaires, chacune articulée au châssis par son extrémité arrière autour d'un pivot parallèle au pivot d'articulation de la poutre qu'elle prolonge vers l'arrière dans sa position horizontale et, pour chaque poutre supplémentaire, un vérin de commande de sa position, attelée entre le châssis et la poutre. On comprend que le point d'application de l'effort de traction sur la charrue en position de travail est dans ce cas également au voisinage des pivots et donc très près du tracteur, ce qui est favorable à la stabilité, la maniabilité et la tenue en fatigue de l'outil.

On notera enfin que dans l'appareil selon l'invention, l'extrémité libre de chaque poutre comporte une roue de support dont l'axe de rotation est perpendiculaire à l'axe de symétrie du châssis, les roues des poutres supplémentaires comportant un bandage ayant une section en T.

D'autres caractéristiques et avantages de l'invention ressortiront de la description donnée ci-après d'un exemple de sa réalisation.

### BREVE DESCRIPTION DES DESSINS

Il sera fait référence aux dessins annexés parmi lesquels :
- la figure 1 est une vue schématique partielle d'un appareil conforme à l'invention dans sa configuration de labour à droite,
- la figure 2 est une vue schématique identique à la figure 1 de l'appareil selon l'invention dans sa configuration de labour à gauche,
- la figure 3 est une vue de dessus d'un mode de réalisation industrielle de l'appareil selon l'invention,
- les figures 4 et 5 sont deux vues de détail de l'appareil relatives au montage d'une roue arrière.

### DESCRIPTION DETAILLEE DE L'INVENTION

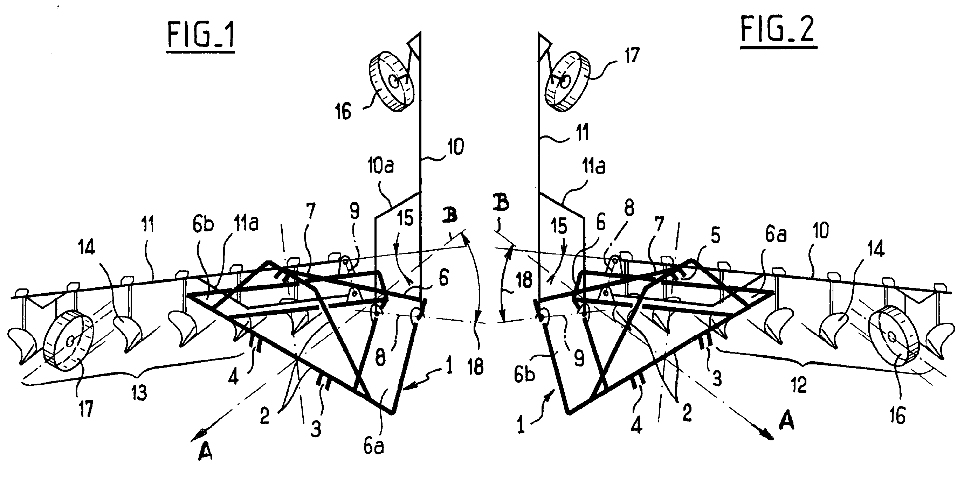

Aux figures 1 et 2, une structure mécano-soudée 1 dessinée en trait épais, constitue le châssis de l'appareil selon l'invention. Cette structure 1 comporte une membrure frontale 2 généralement verticale équipée des trois points 3, 4 et 5 pour son attelage au système de relevage trois points d'un véhicule tracteur. La membrure frontale 2 est solidaire d'une membrure horizontale 6 formée par deux cadres latéraux 6a et 6b convergents vers l'arrière et renforcés par une jambe de force inclinée 7 reliant leur partie arrière à la membrure frontale 2.

Chacun des cadres 6a et 6b porte des pivots 8, 9 autour de chacun desquels est articulée l'extrémité d'une poutre 10, 11, porteuse d'une pluralité 12, 13 de corps de labour 14, extrémité arrière en considérant la direction d'avancement A de l'appareil.

A la figure 1, la poutre 11 est représentée dans une position de travail c'est-à-dire sensiblement horizontale, formant avec la direction d'avancement A de l'appareil, qui est ici confondue avec l'axe de symétrie B du châssis 1, un angle 15 déterminé de manière à correspondre à la nature du travail à effectuer. Les corps de labour 14 de la poutre 11 versent à droite. Sur la figure 1, la poutre 10 est représentée en position relevée autour de son pivot 8 (les corps de labour ne sont pas représentés) et qui correspond à une position hors service.

Chacune des poutres 10 et 11 est équipée à son extrémité opposée à celle articulée au châssis d'une roue de support 16, 17 dont l'axe de rotation est orthogonal à la direction A d'avancement de l'appareil et dont l'écartement par rapport à la poutre correspondante est réglable de manière à constituer avec le réglage du niveau du dispositif d'attelage trois points les moyens de fixation de la profondeur du labour.

A la figure 2, la configuration de l'appareil selon l'invention est celle correspondant à un labour versant à gauche, les corps de labour 14 portés par la poutre 10 travaillante étant prévus à cet effet tandis que la poutre 11 est représentée dans sa position relevée et dépourvue des corps de labour dont normalement elle est équipée. On notera que la poutre 10 forme avec la direction A d'avancement de l'appareil le même angle 15 que formait la poutre 11 avec cette même direction. On aura remarqué sur ces figures que les poutres 10 et 11 peuvent être, au voisinage de leur articulation, formées par une structure en forme de cadre 10a, 11a qui, avec les cadres 6a, 6b du châssis coopèrent pour la mise en place d'au moins un vérin de manoeuvre de chacune de ces poutres autour de leur pivot respectif 8, 9. Dans le cas des figures 1 et 2, et de manière préférée, les pivots 8 et 9 sont horizontaux et forment avec l'axe de symétrie B du châssis un angle 18 complémentaire de l'angle 15. Les pivots 8 et 9 ont ainsi des axes divergents vers l'arrière de l'appareil en considérant le sens A d'avancement de l'appareil.

Dans une configuration de transport de l'appareil non représentée, les deux poutres 10 et 11 sont dans leur position relevée, ce qui confère à l'appareil un encombrement latéral extrêmement réduit.

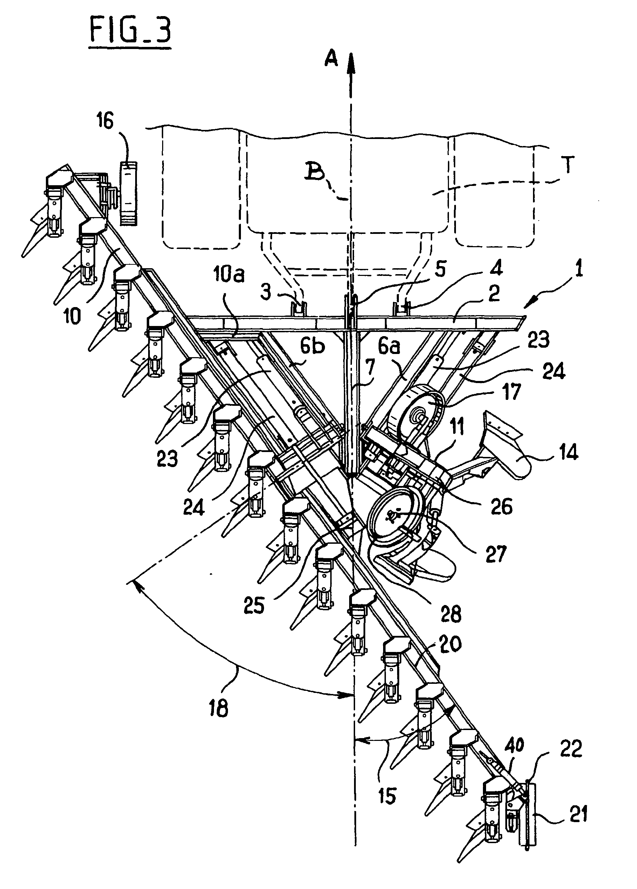

Les schémas décrits ci-dessus ont été réalisés pour mettre en évidence les caractéristiques essentielles de l'invention ; ils ne correspondent que partiellement à un appareil réel. La figure 3 est une vue de dessus d'un appareil aratoire conforme à l'invention dans sa position de travail pour un labour à gauche derrière un tracteur portant la référence T. On retrouve sur cette figure la plupart des éléments déjà décrits en regard des figures précédentes avec les mêmes références. L'appareil représenté à la figure 3 comporte deux poutres supplémentaires dont une 20 est représentée dans sa position de travail en prolongement de la poutre 10 elle-même dans sa position de travail. Cette poutre 20 est articulée par son extrémité avant par rapport au sens A d'avancement de l'appareil à l'extrémité arrière du cadre 6a du châssis autour d'un pivot non visible sur cette figure du fait de la complexité de la représentation de l'appareil, ce pivot étant horizontal et situé à l'arrière du pivot 8 et parallèle à ce dernier. La poutre 20 est équipée de corps de labour 14 versant à gauche comme ceux de la poutre 10 et son extrémité libre porte une roue 21 de réglage de la profondeur de labour. On notera que le bandage de cette roue 21 a un profil en T 22 qui se comporte à la manière d'une dérive en pénétrant dans le sol pour encaisser au moins partiellement des efforts latéraux que subit la charrue au travail tendant à la déplacer vers la droite dans le sens d'avancement A. On notera la présence sur cette figure de deux vérins 23, 24 attelés entre le cadre 6a du châssis, et pour le vérin 23, un élément du cadre 10a de la poutre 10 et, pour le vérin 24, un gousset 25 solidaire de la poutre 20.

On a représenté sur cette figure 3 la poutre 11 dans sa position de la figure 2, c'est-à-dire relevée et pratiquement verticale de même que, dans cette même position, une poutre 26 qui est la poutre symétrique de la poutre 20 par rapport à l'axe B de symétrie du châssis 1. De la même manière que pour la poutre 20, la poutre 26 comporte à son extrémité libre une roue de support 27 avec un bandage en T 28. Les vérins de manoeuvre des poutres 11 et 26 sont également référencés 23 et 24 sur cette figure.

On comprend que dans sa position relevée, la poutre 26 est à l'extérieur du volume balayé par la poutre 20 lorsqu'elle passe elle-même de l'une à l'autre de ses positions possibles autour de son pivot d'articulation au châssis. Bien entendu, de manière symétrique, la position relevée de la poutre 20 n'interfère pas avec le volume balayé par la poutre 26 lorsqu'elle passe de l'une à l'autre de ses positions. A partir de la figure 3, on imagine aisément la- position de transport de l'appareil aratoire selon l'invention lorsque les deux poutres 10 et 20 sont en position relevée comme les poutres 11 et 26. On comprend que dans cette configuration, l'encombrement latéral de la charrue est pratiquement égal à l'encombrement latéral du tracteur auquel elle est attelée.

La figue 3 montre clairement l'un des avantages de l'appareil selon l'invention : la proximité longitudinale des outils travaillant le sol et du tracteur. En effet on voit que la roue 16 de la poutre 10, comme la roue 17 de la poutre 11 lorsqu'elle est dans sa position de travail, est au niveau du train de roues arrières du tracteur T. La compacité longitudinale de l'ensemble formé par le tracteur et la charrue lui confère une grande facilité dans la conduite du travail. En outre, lorsque les quatre poutres sont relevées, l'ensemble tracteur et charrue qui est une charrue portée, est d'une très grande compacité longitudinale ce qui lui permet une grande facilité de circulation et une grande facilité de manoeuvre en bout de champ.

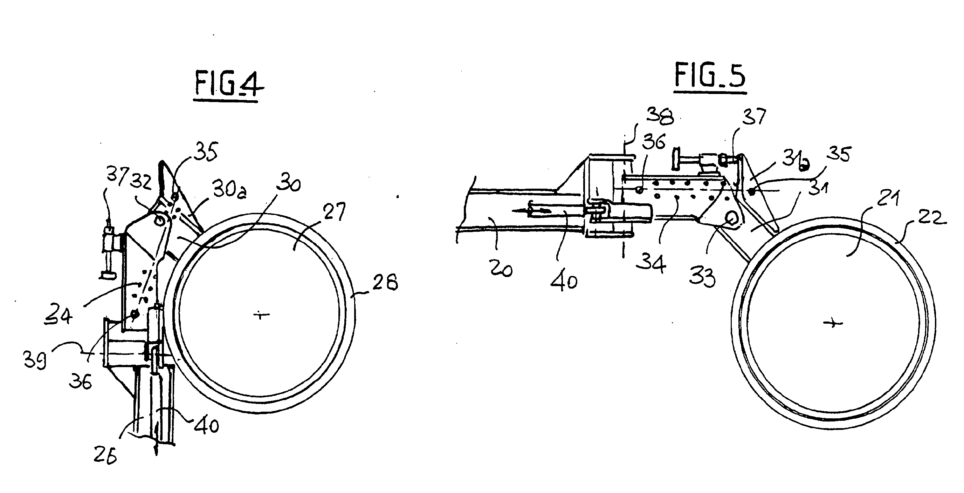

Aux figures 4 et 5 on a représenté une roue arrière, par exemple pour la figure 4 la roue arrière 27 de la figure 3 et, pour la figure 5, la roue arrière 21 de la figure 3. On voit que ces roues sont portées par un bras 30, 31 porte-roue articulé à l'extrémité de chaque poutre 26 et 20 correspondante autour d'un axe 32, 33 qui permet un mouvement pendulaire du bras porte-roue.

Ainsi, quand la poutre se relève, la roue qu'elle porte se rabat contre elle. Quand la poutre s'abaisse, la roue s'écarte sous l'effet de la gravité. Il est en outre utile que la roue soit au plus loin du dernier corps de labour vers l'arrière. On cherche donc à ce que le bras porte-roue soit manoeuvré vers l'arrière au-delà de la verticale passant par l'articulation 32 ou 33 lorsque la poutre est en position de travail. Dans le même temps, il est intéressant que lorsque la poutre est relevée, le bras soit ramené contre cette poutre. Pour ce faire, on a prévu un ressort 34 entre un point de fixation 35 porté par une extension 30a, 31a du bras porte-roue et un point de fixation 36 porté par la poutre correspondante de manière que, sous l'effet de la gravité, la ligne passant par les points 35 et 36, le long de laquelle s'exerce l'effort de traction du ressort tendu entre ces points, passe sous l'axe 32, 33 au relevage et qu'elle passe au-dessus de cet axe en position de travail. L'extension 30a, 31a est dans cette dernière position en appui contre une butée réglable 37 portée par la poutre, qui définit l'éloignement maximum du soc et de la roue.

Par cette disposition, on diminue le risque de bourrage entre la roue et le dernier soc en position de travail et on évite que la roue soit trop haut perchée en position de transport de la charrue.

On aura noté que l'axe d'articulation 32, 33 est porté par une chape elle-même orientable autour d'un pivot 38, 39 et réglable en orientation autour de ce pivot (vertical en position de travail) par un tirant de réglage 40.

Les outils travaillant le sol sont ici représentés sous forme de socs ; ce n'est pas sortir du cadre de l'invention que de les remplacer par tout autre instrument aratoire tel que des dents flexibles ou des disques.

## Revendications

1. Appareil aratoire formé d'un châssis (1) avec un axe de symétrie longitudinal (B) et avec des moyens (3, 4, 5) pour son attelage à l'arrière d'un tracteur agricole et d'une structure porteuse à laquelle sont liés les corps de labour (14), structure reliée au châssis (1) par des moyens autorisant une mobilité relative entre elle et le châssis, **caractérisé en ce que** la structure porteuse comporte au moins deux poutres (10, 11), chacune articulée au châssis (1) par son extrémité arrière, en considérant le sens d'avancement (A) de l'appareil autour d'un pivot (8, 9) du châssis entre une position de travail sensiblement horizontale dans laquelle la poutre forme avec l'axe de symétrie (B) du châssis (1) un angle (15) déterminé ouvert vers l'avant et une position relevée dans laquelle les corps de labour (14) sont éloignés du sol.

2. Appareil aratoire selon la revendication 1, **caractérisé en ce que** structure porteuse comporte deux poutres supplémentaires (20, 26), chacune articulée au châssis par son extrémité avant autour d'un pivot du châssis entre une position de travail prolongeant l'une des poutres (10, 11) susdites et une position relevée dans laquelle les corps de labour (14) sont éloignés du sol.

3. Appareil aratoire selon la revendication 2, **caractérisé en ce que** la position relevée de chaque poutre supplémentaire (20, 26) est à l'extérieur de la trajectoire balayée par l'autre poutre supplémentaire (26, 20) entre ses deux positions.

4. Appareil aratoire selon l'une quelconque des revendications précédentes, **caractérisé en ce que** chaque pivot (8, 9) est horizontal et est incliné sur l'axe de symétrie (A) du châssis (1) d'un angle (18) complémentaire de l'angle (15) déterminé susdit, les pivots (8, 9) étant divergents vers l'arrière du châssis en considérant le sens d'avancement (B) de l'appareil au travail.

5. Appareil aratoire selon la revendication 4, **caractérisé en ce qu'**il comporte pour chaque poutre (10, 11, 20, 26) un vérin de commande (23, 24) de sa position, attelé entre le châssis (1) et cette poutre.

6. Appareil aratoire selon l'une quelconque des revendications précédentes, **caractérisé en ce que** l'extrémité libre de chaque poutre (10, 11, 20, 26) comporte une roue (16, 17, 21, 27) de support dont l'axe de rotation est perpendiculaire à l'axe de symétrie (A) du châssis lorsque cette poutre est dans sa position de travail.

7. Appareil aratoire selon la revendication 6, **caractérisé en ce que** les roues (21, 27) des poutres supplémentaires (20, 26) comportent un bandage (22, 28) ayant un profil en T.

8. Appareil selon la revendication 6 ou la revendication 7, **caractérisé en ce que** chacune des roues (21, 27) des poutres supplémentaires (20, 26) est portée par un bras articulé sur la poutre correspondante entre une position de rabattement contre la poutre sous l'effet de la gravité lorsque celle-ci est relevée et une position d'extension à l'arrière de cette poutre lorsqu'elle est en position de travail.

9. Appareil selon la revendication 8, **caractérisé en ce qu'**il comprend un ressort (34) de traction entre la poutre et le bras pour assister l'extension ou le rabattement du bras selon la position de la poutre.

## Claims

1. A plough implement formed by a frame (1) with a longitudinal axis of symmetry (B) and with means (3, 4, 5) for coupling to the rear of an agricultural tractor, and a carrier structure having the tilling bodies (14) connected thereto, which structure is connected to the frame (1) by means allowing relative movement between the structure and the frame, the implement being **characterized in that** the carrier structure comprises at least two beams (10, 11), each hinged to the frame (1) via its rear end, about a pivot (8, 9) of the frame, to pivot between a substantially horizontal working position in which the beam forms a determined forwardly open angle (15) with the axis of symmetry (B) of the frame (1), and a raised position in which the tiling bodies (14) are moved away from the ground, rear and forward being relative to the forward advance direction (A) of the implement.

2. A plough implement according to claim 1, **characterized in that** the carrier structure includes two additional beams (20, 26) each hinged to the frame via its front end about a pivot of the frame to pivot between a working position extending one of the above-mentioned beams (10, 11) and a raised position in which the tilling bodies (14) are spaced apart from the ground.

3. A plough implement according to claim 2, **characterized in that** the raised position of each additional beam (20, 26) is outside the path swept by the other additional beam (26, 20) between its two positions.

4. A plough implement according to any preceding claim, **characterized in that** each pivot (8, 9) is horizontal and is inclined relative to the axis of symmetry (A) of the frame (1) by an angle (18) complementary to the above-mentioned determined angle (15), the pivots (8, 9) being divergent towards the rear of the frame relative to the forward advance direction (B) of the implement in operation.

5. A plough implement according to claim 4, **characterized in that** it includes, for each beam (10, 11, 20, 26), a position-control actuator (23, 24) coupled between the frame (1) and the beam.

6. A plough implement according to any preceding claim, **characterized in that** the free end of each beam (10, 11, 20, 26) includes a support wheel (16, 17, 21, 27) having its axis of rotation perpendicular to the axis of symmetry (A) of the frame when the beam is in its working position.

7. A plough implement according to claim 6, **characterized in that** the wheels (21, 27) of the additional beams (20, 26) include respective tires (22, 28) of T-shaped profile.

8. An implement according to claim 6 or claim 7, **characterized in that** each of the wheels (21, 27) of the additional beams (20, 26) is carried by an arm hinged to the corresponding beam between a position folded down against the beam under the effect of gravity when the beam is raised, and a position extended behind the beam when the beam is in the working position.

9. An implement according to claim 8, **characterized in that** it includes a traction spring (34) between the beam and the arm for assisting in extending or folding down the arm, depending on the position of the beam.

## Patentansprüche

1. Landwirtschaftliches Gerät, das von einem Rahmen (1) mit einer Längssymmetrieachse (B) und mit Mitteln (3, 4, 5) für seine Befestigung an der Rückseite eines Traktors sowie von einer tragenden Struktur gebildet ist, an der die Kultivierungskörper (14) angebracht sind, wobei die Struktur mit dem Rahmen (1) über Mittel verbunden ist, die eine Relativbeweglichkeit zwischen ihr und dem Rahmen gestatten, **dadurch gekennzeichnet, dass** die tragende Struktur mindestens zwei Balken (10, 11) umfasst, die jeweils in Vorschubrichtung (A) des Geräts gesehen über ihr hinteres Ende an dem Rahmen (1) um eine Gelenkachse (8, 9) des Rahmens angelenkt sind, für eine Bewegung zwischen einer im Wesentlichen horizontalen Arbeitsstellung, in der der Balken mit der Symmetrieachse (B) des Rahmens (1) einen vorgegebenen nach vorne offenen Winkel (15) bildet, und einer angehobenen Stellung, in der die Kultivierungskörper (14) vom Boden entfernt sind.

2. Landwirtschaftliches Gerät nach Anspruch 1, **dadurch gekennzeichnet, dass** die tragende Struktur zwei zusätzliche Balken (20, 26) umfasst, die jeweils über ihr vorderes Ende am Rahmen um eine Gelenkachse des Rahmens angelenkt sind, für eine Bewegung zwischen einer Arbeitsstellung, die einen der oben genannten Balken (10, 11) verlängert, und einer angehobenen Stellung, in der die Kultivierungskörper (14) vom Boden entfernt sind.

3. Landwirtschaftliches Gerät nach Anspruch 2, **dadurch gekennzeichnet, dass** die angehobene Position jedes zusätzlichen Balkens (20, 26) außerhalb der Bahn liegt, die der andere zusätzliche Balken (26, 20) zwischen seinen beiden Stellungen überstreicht.

4. Landwirtschaftliches Gerät nach einem der vorhergehenden Ansprüche, **dadurch gekennzeichnet, dass** jede Gelenkachse (8, 9) horizontal und zur Symmetrieachse (A) des Rahmens (1) um einen Winkel (18) geneigt ist, der komplementär zu dem oben genannten vorgegebenen Winkel (15) ist, wobei die Gelenkachsen (8, 9) in Vorschubrichtung (B) des Geräts bei der Arbeit gesehen nach hinten vom Rahmen weg divergieren.

5. Landwirtschaftliches Gerät nach Anspruch 4, **dadurch gekennzeichnet, dass** es für jeden Balken (10, 11, 20, 26) einen Steuerzylinder (23, 24) zur Steuerung seiner Stellung umfasst, der zwischen den Rahmen (1) und diesen Balken gekoppelt ist.

6. Landwirtschaftliches Gerät nach einem der vorhergehenden Ansprüche, **dadurch gekennzeichnet, dass** das freie Ende jedes Balkens (10, 11, 20, 26) ein Stützrad (16, 17, 21, 27) umfasst, dessen Rotationsachse senkrecht zur Symmetrieachse (A) des Rahmens steht, wenn dieser Balken in seiner Arbeitsstellung ist.

7. Landwirtschaftliches Gerät nach Anspruch 6, **dadurch gekennzeichnet, dass** die Räder (21, 27) der zusätzlichen Balken (20, 26) einen Radreifen (22, 28) umfassen, der ein T-Profil hat.

8. Gerät nach Anspruch 6 oder Anspruch 7, **dadurch gekennzeichnet, dass** jedes der Räder (21, 27) der zusätzlichen Balken (20, 26) von einem Arm getragen wird, der an dem entsprechenden Balken angelenkt ist, für eine Bewegung zwischen einer unter der Wirkung der Schwerkraft an den Balken eingeklappten Stellung, wenn dieser angehoben ist, und einer ausgefahrenen Stellung hinter diesem Balken, wenn dieser in der Arbeitsstellung ist.

9. Gerät nach Anspruch 8, **dadurch gekennzeichnet, dass** es zwischen dem Balken und dem Arm eine Zugfeder (34) umfasst, um das Ausfahren oder das Einklappen des Arms je nach Stellung des Balkens zu unterstützen.
